# EUROPEAN PATENT APPLICATION

(11) **EP 4 596 174 A1**
(43) Date of publication of application: **06.08.2025**
(21) Application number: 24305190.1
(22) Date of filing: 02.02.2024
(51) Int. Cl.: B24B 9/14, B24B 49/03, B24B 49/12, G02C 13/00, G01B 11/24, G01B 11/25

(54) **METHOD OF DETERMINING PARAMETERS FOR TRIMMING AN OPTICAL LENS**

(71) Applicant: Essilor International, 94220 Charenton-Le-Pont (FR)
(72) Inventor: ROUSSEL, Laurent, 93320 LES PAVILLONS SOUS BOIS (FR); AMEURLAIN, Hugues, 92160 ANTONY (FR)
(74) Representative: Jacobacci Coralis Harle

(57) **Abstract**

The invention relates to a method of determining parameters for trimming an optical lens in view of its mounting in a spectacle frame (20) in which at least one reference lens (10) is mounted, comprising:
a step of acquiring at least one image of said reference lens, and
a step of processing said image in order to deduce therefrom trimming parameters for trimming the optical lens,
wherein the method also comprises, before said step of acquiring, a step of marking during which an individual makes at least one mark (32) on said reference lens, and
wherein, during said step of processing, at least one trimming parameter is deduced from said at least one mark.

## Description

### TECHNICAL FIELD OF THE INVENTION

The present invention generally relates to the field of eyeglasses.

It more particularly relates to a method of determining parameters for trimming an optical lens in view of its mounting in a spectacle frame in which is mounted at least one reference lens, this method comprising:
- a step of acquiring, with an image sensor of a machine for acquiring images, at least one image of said reference lens, and
- a step of processing, with a processing unit, said image in order to deduce therefrom trimming parameters for trimming the optical lens.

### BACKGROUND INFORMATION AND PRIOR ART

The technical part of the work of an optician, which consists in mounting a pair of ophthalmic lenses in a spectacle frame selected by a customer, may generally be split into four main operations:
- acquiring the shapes of the outlines of each lens to be mounted in the spectacle frame selected by the customer,
- centering each ophthalmic lens, which consists in determining the frame of reference of the lens using centering markings provided thereon, then in suitably positioning the outline of the rim acquired beforehand in the frame of reference of the lens so that, once edged to this outline then mounted in its frame, the lens is correctly positioned with respect to the corresponding eye of the customer and fulfils as best as possible the optical function for which it was designed,
- blocking each lens, which consists in attaching a blocking accessory to the lens, so that the lens can be easily extracted from the centering station and then be engaged in the edging station without loss of frame of reference, then
- edging (or "trimming") and finishing each lens.

The edging operation consists in eliminating the superfluous peripheral part of the lens, so as to adapt the outline thereof, which is usually initially circular, to a shape identical to that of the outline of the eyewire of the spectacle frame or of approximate shape.

The finishing operation consists in forming means for attaching the lens to the spectacle frame (a bevel, a bezel, holes...).

The quality of this edging operation depends in large part on the precision of the operation of acquiring the shapes of the outlines of the eyewires of the spectacle frame.

Specifically, when the spectacle frame is rimmed, this acquisition operation generally consists, for the optician, in probing the interior outline of the eyewire of the spectacles frame selected so as to precisely determine the coordinates of points characterizing the shape of the outline of this eyewire. Then, the finishing operation consists in beveling the outline of the lens.

In contrast, when the spectacle frame is half-rimmed or rimless (the lenses then being drilled), use is made of a reference lens (supplied to the optician together with the spectacle frame) to determine the shape that the optical lens to be edged must have. Specifically, an optical acquisition of an image of this reference lens extracted from the spectacle frame makes it possible to ascertain the shape of the outline of this reference lens and the position of any holes therein. Then, the finishing operation consists in machining a groove in the outline of the lens or holes through the lens.

At present, other types of eyeglass frames having mixed attaching means are appearing on the market.

For example, eyeglass frames are known in which the attaching means are interrupted along a part of the outline of the lens. The step of finishing the lens then comprises a first operation of beveling a major portion of the outline of the lens, and a second operation of leveling the edge face of the lens using a cylindrical grinding wheel in the interruption of the surround.

Half-rimmed eyeglass frames having unusual attaching means are also known. For instance, the inside face of each upper half-rim can include a ridge (rather than a groove) suitable to be engaged into an engagement groove. The step of finishing the lens then includes a first operation of beveling a top portion of the outline of the lens, followed by an operation of grooving a bottom portion of the outline of the lens.

Other embodiments of eyeglasses having mixed attaching means are known, for instance eyeglasses comprising lenses having along only a part of their surrounds a step bevel (the lens being machined deeper on one side of the bevel than on the other side).

The major drawback of those shaping methods, in which the finishing step comprises two distinct operations, is that they need to locate the boundaries between the two (or more) portions of the outline of the lens, which is difficult to achieve.

Therefore, the operator makes an estimation when he specifies the location of these boundaries, but a bad estimation can result in a non-aesthetic design and/or in a lens which will not fit to the spectacle frame.

More generally, before the operation of trimming the two lenses of the pair of eyeglasses, it may be difficult for the operator to enter accurate and right data in the trimming machine (typically regarding the positions of the boundaries, but also in any other cases, for instance when he has to specify the optical or material characteristics of the lens, or when he has to enter if the current lens is intended to be installed in the left or right eyewire of the frame).

### SUMMARY OF THE INVENTION

In this context, the present invention provides a user-friendly solution to locate these boundaries or to provide the trimming machine with the required information.

Specifically, the invention proposes a method as described above (with a step of acquiring and a step of processing), also comprising, before said step of acquiring, a step of marking during which an individual makes at least one mark on the reference lens, and wherein, during said step of processing, at least one trimming parameter is deduced from said at least one mark.

Thus, according to the invention, the operator marks on the reference lens indications such as marks indicating the positions of the boundaries (or any other useful information), so that these indications can be read by the acquisition machine and processed in order to best characterize the lenses before their trimming.

Other preferred features of the invention are the following ones:
- said at least one trimming parameter is deduced by said processing unit from a shape of said at least one mark,
- said reference lens comprises two main faces and an edge face, said edge face having a profile that is different along at least two parts of the outline of said reference lens,
- during step of marking, two distinct marks are made on at least one of said main faces, in front of each part, and during said step of processing, the profile of each part is deduced from the shape of each mark,
- said at least one trimming parameter is deduced from a position of said at least one mark,
- during step of marking, said mark is made on at least one of said main faces, in front of a junction between said at least two parts, and during said step of processing, the position of said junction is deduced from the position of the mark,
- the processing unit automatically determines the position of each mark on the image and deduces from said position the position of each junction.
- in a variant, said processing unit being suitable to communicate with a Human Machine Interface that comprises at least a screen, said processing unit determines an outline of said reference lens, controls the display of said image and said outline on the screen in a superimposed position, and - after an individual has pointed out on said image the position of each mark by at least one point - deduces from each point the position of each junction,
- the reference lens being fixed into the spectacle frame during said step of marking, the process comprises, before said step of acquiring, a step of removing the reference lens from the spectacle frame and a step of positioning said reference lens on a support of said machine for acquiring images,
- each mark is made by a hand tool such as a pen or a brush or a stamp,
- each mark is made in an erasable ink,
- each mark is engraved into the lens,
- the shape of the mark indicates a parameter relative to the reference lens and/or to the optical lens and/or to the spectacle frame,
- the shape of the mark indicates the position of the reference lens on the spectacle frame, in right position or in left position,
- the shape of the mark indicates an ophthalmic characteristic of the optical lens, for instance unifocal or progressive,
- the shape of the mark indicates the material of the optical lens and/or the material of the spectacle frame.

The invention also relates to a process of trimming an optical lens in view of its mounting in a spectacle frame, comprising:
- the above method, and
- a step of machining of an edge of said optical lens according to said trimming parameters.

### DETAILED DESCRIPTION OF EXAMPLE(S)

The following description with reference to the accompanying drawings, given by way of non-limiting example makes it clear what the invention consists in and how it can be reduced to practice.

In the accompanying drawings:
- Figure 1 is a diagrammatic perspective view of a first pair of eyeglasses;
- Figure 2 is a diagrammatic perspective view of a second pair of eyeglasses;
- Figures 3 and 4 are diagrammatic cross-section views of two ophthalmic lenses, that are beveled on a part of their surrounds, the other part being respectively flat or grooved;
- Figure 5 is a part view of the first pair of eyeglasses and of an individual's hand when writing marks on one of the eyeglasses lenses;
- Figure 6 is a part view of the first pair of eyeglasses, and of inscriptions marked onto the lens;
- Figure 7 is a diagrammatic view of an acquisition machine adapted to implement a determining method according to the invention;
- Figure 8 shows an image acquired by the acquisition machine of Figure 7; and
- Figure 9 is a diagram of the determining method.

The invention relates to a method for trimming (i.e. "edging") an optic lens in view of its mounting into a spectacle frame.

It applies to every kind of optical lens and spectacle frame.

Three main categories of spectacle frames exist, namely: rimmed spectacle frames, half-rimmed spectacle frames and rimless spectacle frames (also called drilled frames).

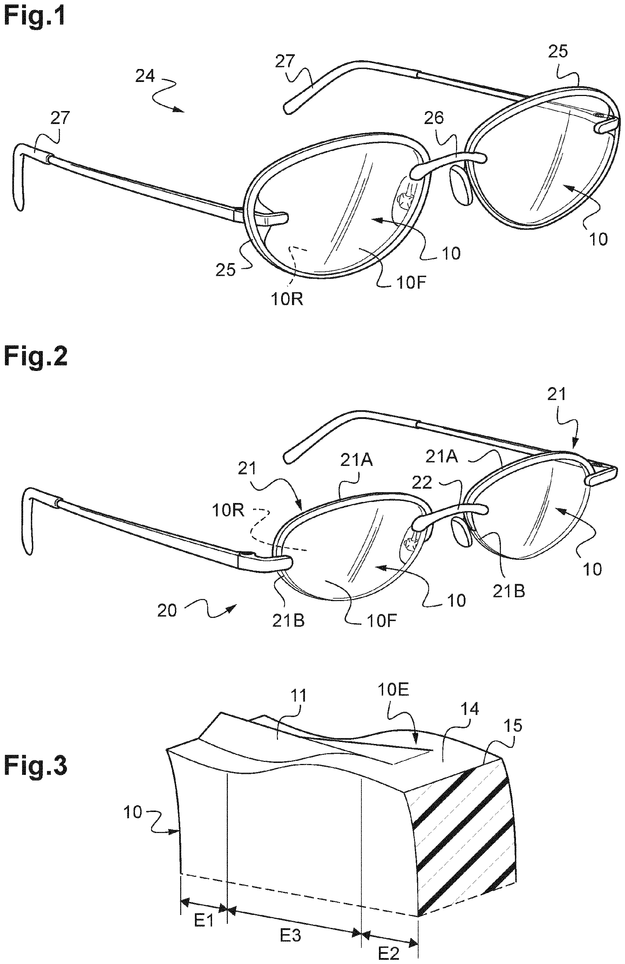

A rimmed spectacle frame 24 (similar to that shown in Figure 1) conventionally comprises two eyewires (called hereinafter "surrounds" or "rims 25") which are each intended to accommodate a trimmed optical lens 10. These two rims 25 are connected together by a bridge 26 and each carries a temple 27. Generally, each rim 25 exhibits a groove, or "bezel", which runs along its interior face. This bezel forms a lens-securing means.

When the spectacle frame is rimmed, the optical lens is usually trimmed so as to exhibit along its edge a fitting rib, commonly called a bevel, whose cross-section generally exhibits a V shape. This bevel is engaged into the bezel to secure the lens to the frame.

A half-rimmed spectacle frame 20 (similar to that shown in Figure 2) comprise two half-rims 21 connected to each other by a bridge 22 and carrying a temple 27. Each half-rim 21 comprises an upper arch 21A that exhibits on its interior face a rib, and a holding thread 21B which is connected by its two ends to the half-rim 21A (to form with the latter a closed outline). The rib and the holding thread 21B form a lens-securing means.

When the spectacle frame is half-rimmed, the optical lens is usually trimmed so as to exhibit along its edge a peripheral groove. The lens is then held in place in the half-rim by fitting an upper part of its groove in the rib, and by engaging the holding thread in a lower part of the groove.

Finally, a rimless spectacle frame (not shown in the Figures) comprise two temples and a bridge, but are devoid of rim or arch. These temples and this bridge are fitted with studs suitable for being inserted into drill holes previously made in the optical lenses. These drill holes form a lens-securing means.

When the spectacle frame is rimless, the optical lens is usually trimmed so as to exhibit an edge whose cross-section is flat, and then be drilled in such a way that the bridge and the corresponding temple of the spectacle frame can be securely fixed thereto. Here, the term "flat" implies that the cross-section of this edge forms a substantially rectilinear segment.

These three types of spectacle frames have in common that a lens attached to any of them has an edge whose cross-section is substantially uniform all along the contour of this lens.

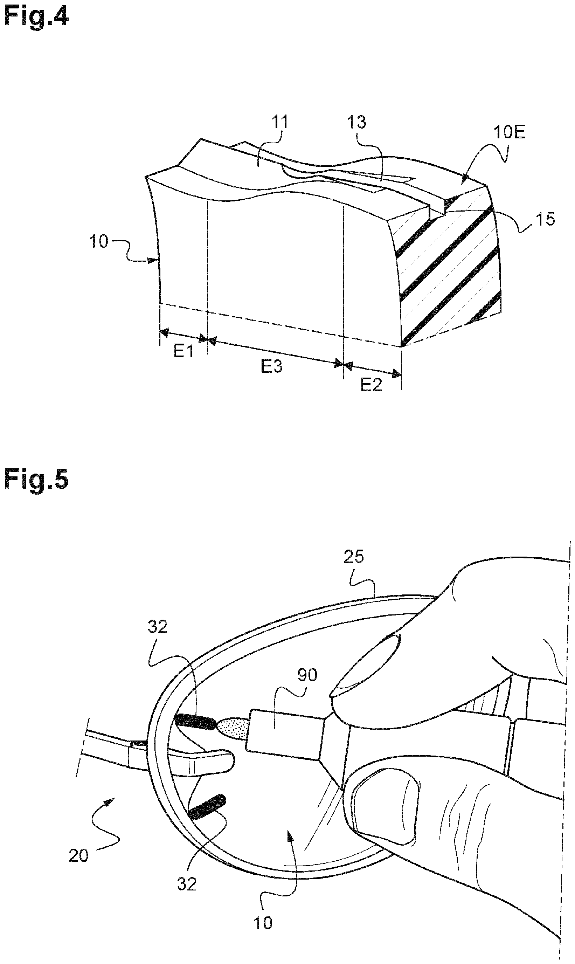

As shown in Figures 3 and 4, the edge cross-section (or "profile 15") is defined as the trace of the intersection of the lens edge with a plane that comprises the central axis of this lens. This central axis is defined as the axis which passes through the center of the lens front face and which is substantially normal to this front face (at this point).

Other kinds of spectacle frames exist, for instance "half-jacket frames" and spectacle frames having mixed surrounds.

A half jacket frame is a type of eyewear the frame of which extends only on the upper part of the lenses, leaving the lower part of the lenses exposed. For such a frame, the lower parts of the outlines of the lenses must be flat. The upper parts are said "step beveled" (the lens being machined deeper on one side of the bevel than on the other side).The term "mixed surrounds" is used to mean any frame shaped so as to be fitted with a lens the edge of which comprises at least two parts having distinct cross-sections.

In the following, distinct cross-sections will mean that:
- a part of the lens edge presents a first cross-section for instance selected amongst the list: "grooved", "flat", "beveled", "step beveled", and
- another part presents a second cross-section selected in this list but that is distinct from the first cross-section.

These edge parts are connected either abruptly at junction points, or more gently at junction zones. These junction points or zones are called hereinafter "interruptions".

In the present description, attention is given to two particular types of spectacle frame having mixed surrounds but the invention applies to any kind of mixed surrounds frames. More generally, as explained after, the invention relates to any kind of eyeglasses (even those having no mixed surrounds).

In the first example shown in Figures 1 and 3, the frame 24 comprises two rims 25 each arranged with, on a part of its internal face, a bezel. This bezel is interrupted in a temple part of the rim. In this temple part, the lens is designed so that a gap (an empty space) is left between its edge and this part of the rim. Consequently, the lens has a beveled part suitable to be engaged in the bezel, and a flat part. Moreover, the frame temples comprise studs suitable for being inserted into drill holes previously made in the lenses 10.

In Figure 3 is illustrated a cross-section of this lens 10 showing the interruption between these beveled and flat parts. It clearly appears in this Figure that the lens 10 has a bevel 11 on a first part E1 of its outline, and a flat edge 14 on another part E2. Between these two parts, the interruption of the outline of the lens 10 has a varying cross-section shape (its profile 15 changes). In this link part E3, the apex of the bevel 11 is progressively truncated.

In a second example shown in Figures 2 and 4, the spectacle frame 20 comprises two half-rims 21 each arranged with, on its internal face, an engagement groove (a bezel).

In Figure 4 is illustrated a section of a lens 10 suitable to be engaged in this frame. It appears in this Figure that the lens 10 has a bevel 11 on a first part E1 of its outline that is suitable to be engaged into the bezel half-rim, and a groove 13 on another part E2 suitable to receive the holding thread 21B. Between these two parts, a link part E3 of the outline of the lens 10 has a varying cross-section shape. In this link part E3, the apex of the bevel 11 is progressively truncated and the bottom of the groove 13 becomes increasingly deeper.

The optician's job is therefore to mount a pair of new lenses (called hereinafter "ophthalmic lenses") on a spectacle frame selected by the wearer.

When the spectacle frame is new, it is generally supplied to the optician with blanks, that is to say zero-power presentation lenses (called hereinafter "reference lens").

When the spectacle frame is not new (the lenses having to be replaced by new ones), the old lenses will also be called hereinafter "reference lens".

Each lens (ophthalmic or reference) has two optical faces (namely a front face 10F and a rear face 10R) and an edge face 10E (called hereinafter edge).

The shape of the edge of the ophthalmic lens is initially circular. The shapes of its front and rear faces are designed such that the lens has optical characteristics allowing defects in the vision of the customer to be corrected.

Before trimming new ophthalmic lenses so as to replace the reference lenses, the optician must implement an operation of acquiring trimming parameters such as:
- the outline according to which each new ophthalmic lens will have to be trimmed,
- the kind(s) of the lens-securing means, and, if the frame comprises mixed surrounds,
- the location of the interruptions.

These parameters are indeed useful to edge the ophthalmic lens so that the latter can be engaged into the selected frame.

Here, this acquisition is carried-out on the basis of the shape of the reference lenses which are initially mounted in the spectacle frame. In this manner, the method will apply equally well to every kind of spectacle frames.

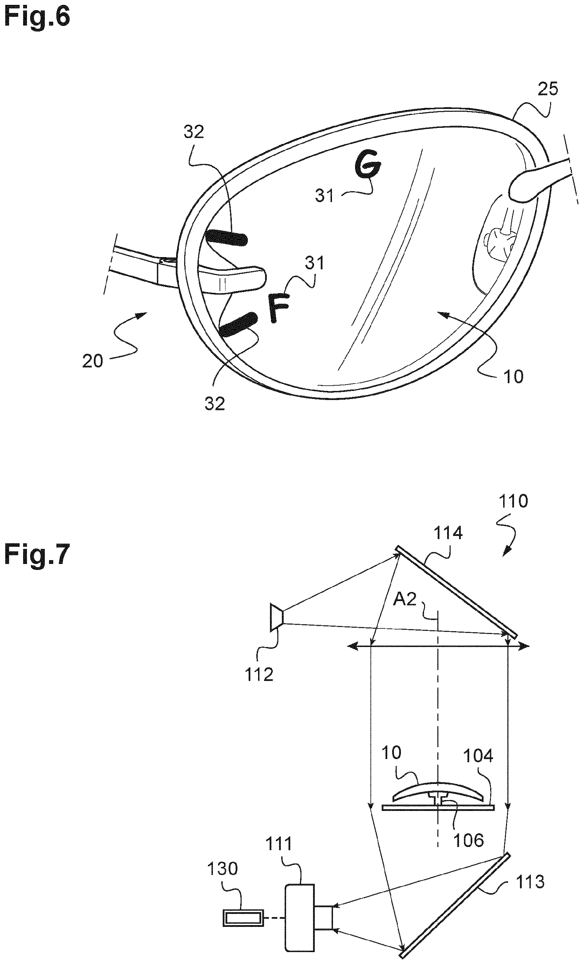

Figure 7 shows an acquisition machine 110 for carrying-out this acquisition operation.

This acquisition machine 110 is preferably automatic in the sense in that the acquisition operation is performed automatically, without the help of an optician.

This machine may have several shapes.

In the shown embodiment, the acquisition machine 110 comprises a workstation 104 (a protective glass) that is fixed to a chassis in a horizontal plane and that may comprise a holder 106 for holding the reference lens 10. It also comprises optical means for acquiring images of lenses and a processing unit 130.

The optical means comprise, on one side of the workstation 104, means for illuminating the lens placed onto the workstation 104, and, on the other side, image sensor means for acquiring the emitted light.

The illuminating means comprise a light source 112 which emits a light beam, a collimating lens, and a mirror 114 inclined at 45° which reflects this light beam towards the lens.

The image sensor means comprise an image sensor (here a camera 111) and a mirror 113 inclined at 45° which reflects the light beam towards the camera 111.

The processing unit 130 is programmed to process the acquired images.

To this end, it comprises a central processing unit (CPU), a memory and input/output components.

Thanks to its memory, the processing unit stores information used in the process described below. It particularly stores a computer application, consisting of computer programs comprising instructions, the execution of which allowing the implementation by the processing unit of the method described below.

This processing unit 130 is connected to the light source 112 and to the camera 111.

In one embodiment, it is also connected to a man-machine interface, here a touch screen (no shown).

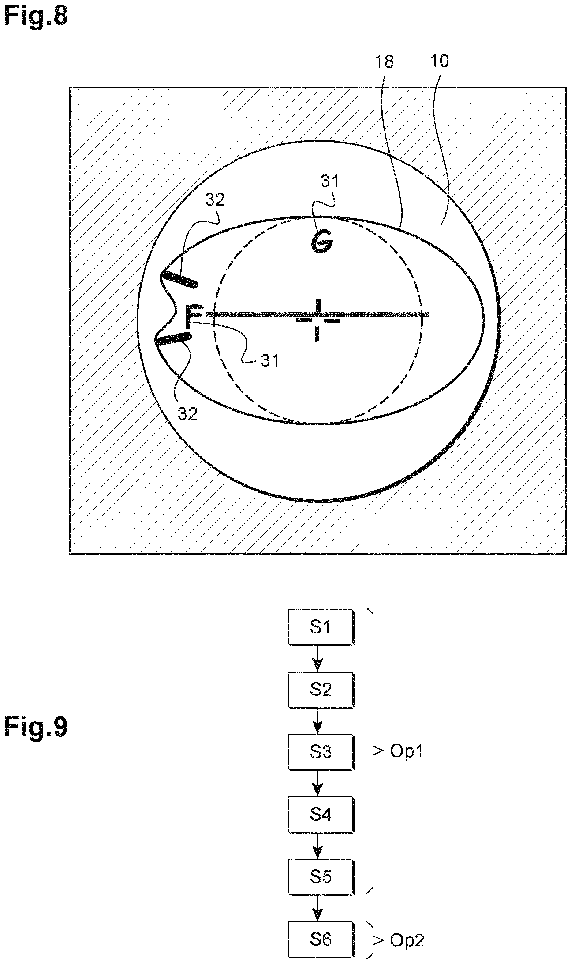

In Figure 9 is shown a process of trimming an ophthalmic lens in view of its mounting in a spectacle frame 20.

In the following, it will be considered that this process is carried-out on each ophthalmic lens to be mounted in the spectacle frame 20, the one after the other. But in the following, the description will only relate to the replacement of only one of the reference lenses 10 of the spectacle frame 20 illustrated in Figure 1 by an ophthalmic lens. Of course, the method could be implemented in a homologous manner for the other ophthalmic lens, and for any other type of optical lens (solar lens, etc.) and spectacle frame.

This process comprises two main operations:
- a first operation Op1 of acquiring the trimming parameters required to know how edging the ophthalmic lens, and
- a second operation Op2 of trimming this ophthalmic lens.

Here, the first operation comprises five main steps S1 to S5 when the second operation comprises only one step S6.

The first step S1 consists in marking at least one datum on the reference lens 10, preferably when this reference lens is still mounted into the spectacle frame 24.

The marking is made by an individual, here an optician.

As shown in Figure 5, each mark 31, 32 is made by a hand tool such as a brush or a stamp. Here, the optician uses a pen 90 suitable to apply on the lens a layer of erasable ink.

In a variant, each mark may be engraved.

In the embodiment shown in Figure 6, the optician makes four marks 31, 32 on the front face of the reference lens 10 (in variant, the marks may be done on the rear face).

Two first marks 32 locate the interruptions (between the parts of the reference lens edge having distinct kinds of cross-sections).

The aim for the optician is to point the center of each link part E3.

To this end, the optician draws a line on the front face of the reference lens 10, from the center of each link part E3 towards the center of this front face.

In other words, these first marks 32 have positions that provide an information about the characteristics of the reference lens 10 and the frame 20 (here about the characteristics of its lens-securing means).

The second marks 31 have shapes that provide an information about the characteristics of the reference lens 10 and the frame 20 (here about the characteristics of its lens-securing means). More precisely, their shape and position provide such an information.

One second mark 31 is made in front of each part E1, E2 of the reference lens edge (that is to say on each side of each first mark 32).

These second marks 31 indicate the kind of lens-securing means of the frame 20.

Here, these second marks have the forms of numbers or letters, but they could have other shapes.

One of these marks is the letter "F", to indicate that the corresponding edge part of the reference lens 10 is flat, and the other mark is the letter "G" to indicate that the other edge part is grooved.

These letters are drawn along the edge of the reference lens 10, at a distance of the first marks 32 so as to show clearly at which part of the edge each letter refers to.

The step S2 consists in removing the reference lens 10 from the spectacle frame 20.

This step is carried out taking care not to erase the marks affixed to the reference lens 10.

In a variant, this step may be performed before the first step S1.

During a third step S3, the reference lens 10 is placed onto the protective glass of the workstation 104 (the holder 106 is preferably removed), into the acquiring machine 110.

Here, the reference lens 10 is installed so that its rear face is turned towards the camera 111. In a variant, since this lens does not present optical power, it could be turned in the opposite direction.

The objective at this step is that the light beam emitted by the light source 112 passes through the reference lens 10 along an axis A2 substantially parallel to the central axis of this lens.

Consequently, during a fourth step S4, the camera 111 can acquire an image of the reference lens 10, shown in Figure 8.

To be more accurate, there is an optical component between the camera 111 and the protective glass of the workstation 104, named "focusing screen". The shadows of the lens and of its markings are projected on this screen, and the camera focuses on this screen so as to capture an image of these shadows.

This image clearly shows the outline 18 of the reference lens 10, as well as the marks 31, 32 affixed to the lens.

In other words, this image is such that several trimming parameters can be read in it.

During a fifth step, the processing unit 130 processes this image so as to acquire at least a part of the trimming parameters that have to be sent to an edging appliance suitable to trim the ophthalmic lens to a shape next to that of the reference lens 10.

To this end, the processing unit 130 first determines the two-dimensional shape of the outline 18 of the reference lens 10.

This shape may for example be acquired in the form of a set of couples of values corresponding to the coordinates of a plurality of points characterizing the shape of the outline 18 of the reference lens 10 on the acquired image.

Then, the processing unit 130 locates and determines the shapes of the marks 31, 32 which have been drawn on the reference lens 10.

It first extracts the marks in the form of simple lines (the first marks 31).

It locates these first marks, and more precisely, the intersections between these marks and the outline of the reference lens 10 (that is to say the interruptions).

It then locates the second marks 31 (the two letters). Thanks to this localisation, it can assign each mark 31 to a part of the outline 18 of the reference lens 10. It also determines the shape of these second marks 31 in order to deduce the shape of the cross-section of these outline parts.

Here, the processing unit 130 can deduce that one part of the outline is flat and that the other part is grooved.

Of course, if other marks had been written on the lens, the processing unit 130 could also have read them and deduced other trimming parameters. For instance, next to the letter G, the optician could have written a percentage, corresponding to the position of the groove on the edge of the lens (50% corresponding for example to a groove at mid-thickness). Next to the letter F, the optician could also have written an angle corresponding to the angle of the flat edge of the lens (0° corresponding to a standard angle). Any other useful information may also have been written and processed.

During a last step, all the deduced trimming parameters (the two-dimensional shape of the outline of the reference lens 10, the positions of the interruptions, and the shape of the cross-sections of each part of the lens edge) are transmitted to the shaper appliance.

Then, the ophthalmic lens is edged according to these parameters.

To this end, use may be made of any machine for cutting away or removing material so as to modify the outline of an ophthalmic lens in order to fit it to the outline of the surround of the selected spectacle frame. This appliance may be an automatic grinder, commonly said to be numerically-controlled.

To this end, a control unit may be programmed so as to control the various degrees of freedom of the grinder in such a manner as to bring a first part of the outline of the ophthalmic lens to the shape of the first part of the reference lens (with a flat edge), and a second part of the outline of the ophthalmic lens to the shape of the second part of the reference lens (with a grooved edge). Then, the edge face of the ophthalmic lens can be polished.

In a variant, a 3D printer may be used, this printer being suitable to manufacture the entire lens or a peripheral part of the lens by additive manufacturing.

The present invention is in no way limited to the embodiment described and shown.

In particular, the shape and/or the location of the marks may indicate any other parameter relative to the reference lens and/or to the ophthalmic lens to be edged and/or to the spectacle frame.

For example, during the first step, the optician could have written on the center of the reference lens:
- a mark indicating whether this lens is located in the right rim or in left rim of the spectacle frame, and/or
- a mark indicating an ophthalmic characteristic of the ophthalmic lens to be edged, for instance if it is unifocal or progressive, its optical power... and/or
- a mark indicating the material of the ophthalmic lens (plastic or glass), and/or
- a mark indicating the material of the spectacle frame (plastic or metal).

Then, during the last step, the shaper appliance will be programmed to edge the ophthalmic lens according to the written marks (more specifically according to the information the marks refers to).

Therefore, as explained above, the invention also relates to rimmed spectacle frames, half-rimmed spectacle frames and rimless spectacle frames (having no mixed surrounds). The invention can indeed only be used to specify the material of the lens and/or the eyewire in which this lens is intended to be engaged into (left or right).

In the described embodiment, the processing unit automatically deduces the trimming parameters from the position and shape of the marks. In a variant, this deduction may be done with the help of an individual, thanks to the touch screen. To this end, when the screen displays the image of Figure 8 (which shows the outline of the reference lens 10 and the image of the lens in a superimposed position), the individual can pointed out the position of the first marks 32 (using a touch pen, or any other means: mouse, keybord...). Then, the processing unit can deduce that the point indicated by the individual corresponds to an interruption. In this variant, the marks then allow the individual to clearly identify the positions of the interruptions on the image of Figure 8, which would not be possible otherwise.

## Claims

1. Method of determining parameters for trimming an optical lens in view of its mounting in a spectacle frame (20) in which at least one reference lens (10) is suitable to be mounted, comprising:
a step (S4) of acquiring, with an image sensor (111) of a machine for acquiring images (110), at least one image of said reference lens (10), and
a step (S5) of processing, with at least a processing unit (130), said image in order to deduce therefrom trimming parameters for trimming the optical lens,
**characterized in that** it also comprises, before said step (S4) of acquiring, a step (S1) of marking during which an individual makes at least one mark (31, 32) on said reference lens (10), and
**in that**, during said step (S5) of processing, at least one trimming parameter is deduced from said at least one mark (31, 32).

2. Method according to claim 1, wherein said at least one trimming parameter is deduced by said processing unit (130) from a shape of said at least one mark (31).

3. Method according to claim 2, wherein, said reference lens (10) comprising two main faces (10F, 10R) and an edge face (10E), said edge face (10E) having a profile (15) that is different along at least two parts (E1, E2) of the outline of said reference lens (10),
- during step (S1) of marking, two distinct marks (31) are made on at least one of said main faces, in front of each part (E1, E2), and
- during said step (S5) of processing, the profile (15) of each part (E1, E2) is deduced from the shape of each mark (31).

4. Method according to any one of claims 1 to 3, wherein said at least one trimming parameter is deduced from a position of said at least one mark (32).

5. Method according to claim 4, wherein, said reference lens (10) comprising two main faces (10F, 10R) and an edge face (10E), said edge face (10E) having a profile (15) that is different along at least two parts (E1, E2) of the outline of said reference lens (10),
- during step (S1) of marking, said mark (32) is made on at least one of said main faces (10F, 10R), in front of a junction between said at least two parts (E1, E2), and
- during said step (S5) of processing, the position of said junction is deduced from the position of the mark (32).

6. Method according to claim 5, wherein the processing unit (130) automatically determines the position of each mark (32) on the image and deduces from said position the position of each junction.

7. Method according to claim 5, wherein, said processing unit (130) being suitable to communicate with a Human Machine Interface that comprises at least a screen, said processing unit (130):
- determines an outline of said reference lens (10),
- controls the display of said image and said outline on the screen in a superimposed position, and
- after an individual has pointed out on said image the position of each mark (32) by at least one point, deduces from each point the position of each junction.

8. Method according to any one of claims 1 to 7, wherein, the reference lens (10) being fixed into the spectacle frame (20) during said step (S1) of marking, the process comprises, before said step (S4) of acquiring, a step (S2) of removing the reference lens (10) from the spectacle frame (20) and a step (S3) of positioning said reference lens (10) on a support (104) of said machine for acquiring images (110).

9. Method according to any one of claims 1 to 8, wherein each mark (31, 32) is made by a hand tool such as a pen (90) or a brush or a stamp.

10. Method according to any one of claims 1 to 9, wherein each mark (31, 32) is made in an erasable ink.

11. Method according to any one of claims 1 to 10, wherein the shape of the mark indicates a parameter relative to the reference lens (10) and/or to the optical lens and/or to the spectacle frame (20).

12. Method according to claim 11, wherein the shape of the mark indicates the position of the reference lens (10) on the spectacle frame (20), in right position or in left position.

13. Method according to any one of claims 11 and 12, wherein the shape of the mark indicates an ophthalmic characteristic of the optical lens, for instance unifocal or progressive.

14. Method according to any one of claims 11 to 13, wherein the shape of the mark indicates the material of the optical lens and/or the material of the spectacle frame (20).

15. Process of trimming an optical lens in view of its mounting in a spectacle frame (20), comprising:
- a method according to any one of claims 1 to 14,
- a step (S6) of machining of an edge of said optical lens according to said trimming parameters.
